# EUROPÄISCHE PATENTSCHRIFT

(11) **EP 0 849 298 B1**
(45) Veröffentlichungstag und Bekanntmachung des Hinweises auf die Patenterteilung: **18.05.2005**
(21) Anmeldenummer: 97121546.2
(22) Anmeldetag: 08.12.1997
(51) Int. Cl.: C08G 18/08, C08G 18/12, C09D 175/04

(54) **Colöserfreie, wässrige, anionische Polyurethandispersionen, ein Verfahren zu ihrer Herstellung und Verwendung**
Cosolvent-free aqueous anionic polyurethane dispersions, a method for their preparation and their use
Dispersions aqueuses anioniques de polyuréthane sans cosolvant, un procédé de préparation et leur utilisation

(30) Priorität: 20.12.1996 DE 19653585
(43) Veröffentlichungstag der Anmeldung: 24.06.1998
(73) Patentinhaber: Bayer MaterialScience AG, 51368 Leverkusen (DE)
(72) Erfinder: Müller, Hanns-Peter, Dr., 51519 Odenthal (DE); Gruttmann, Horst, 51375 Leverkusen (DE); Casselmann, Holger, Dr., Mcmurray, PA 15317 (US); Müller, Heino, 51377 Leverkusen (DE); Petzoldt, Joachim, Dr., 40789 Monheim (DE); Bock, Manfred, Dr., 51375 Leverkusen (DE)

(56) Entgegenhaltungen:
- EP-A- 0 735 069
- DE-A- 4 016 713
- DATABASE WPI Section Ch, Week 9438 Derwent Publications Ltd., London, GB; Class A25, AN 94-307717 XP002054525 & JP 06 234 912 A (YUHO CHEM KK) , 23.August 1994

## Beschreibung

Die Erfindung betrifft neue colöserfreie, wässrige, anionische Polyurethandispersionen, ein Verfahren zu ihrer Herstellung und ihre Verwendung als Lack, Beschichtungsmittel, Klebstoff und Bindemittel für beliebige Substrate.

Die Erfindung betrifft auch neue recyclisierbare Abziehlake, bestehend aus colöserfreien, wässrigen, anionischen Dispersionen von Polyurethanpolyharnstoffen auf Basis von ausgewählten, im wesentlichen difunktionellen Ausgangsmaterialien, ein Verfahren zu ihrer Herstellung und ihre Verwendung als Abziehlack zum temporären Schutz von Kraftfahrzeugen, Flugzeugen, Stahl- und Aluminiumprofilen, Glas- und Kunststoffscheiben und beliebigen anderen Substraten und ein Verfahren zur Wiederverwendung der gebrauchten abgezogenen Lackschichten.

In Wasser dispergierte Polyurethankunststoffe sind lange bekannt (z.B. die Angewandte Makromolekulare Chemie, 98 (1981) 133 - 165). Zu Polyurethanbindemitteln in Wasserlacken; Wasserlacke, 1992 ISBN 3-8249-0100-5, S. 46).

Durch ihre überlegenen Eigenschaften wie Weichheit, Abriebfestigkeit, Reißfestigkeit, aber auch Härte und Zähigkeit, haben sich solche Polyurethankunststoffe ein weites Feld von Anwendungen auf den Gebieten der Lacke, Beschichtung, Klebstoffe und Bindemittel erschlossen.

Mit der strikten Forderung, die Emission von flüchtigen organischen Bestandteilen (volatile of organic compound VOC) zu reduzieren, haben wässrige Polyurethandispersionen des Standes der Technik einen wichtigen Beitrag geleistet.

Wässrige anionische Polyurethandispersionen des Standes der Technik enthalten aber in der Regel immer noch hochsiedende, polare organische Lösungsmittel wie Dimethylformamid, N-Methylpyrrolidon etc. Der Zusatz dieser Hochsieder vereinfacht den Herstellungsprozess. Nach Überführen der anionischen Polyurethankunststoffe in die wässrige Phase verbleiben diese Hochsieder in den Dispersionen. Dies ist nicht unerwünscht, denn beim Verwenden einer derartigen Dispersion als Lack, Beschichtung oder Klebstoff dienen diese organischen, polaren Verbindungen als Weichmacher, Verlaufshilfsmittel und/oder Koaleszensmittel und erweitern das Verarbeitungsfenster der Dispersionen.

Nachteilig ist, dass diese Hochsieder über den Zeitraum der Verwendung als Lack, Beschichtung oder Klebstoff aus den Schichten ausdampfen und dass die organischen, polaren Hochsieder die Wasserfestigkeit der Lack-, Beschichtungs- und Klebstoffschichten herabsetzen.

Bei der Verwendung der colöserhaltigen Dispersionen als Abziehlack zum temporären Schutz von lackierten Oberflächen sind organische, polare, hochsiedende Lösemittel schon deshalb unerwünscht, da sie die lackierten Flächen schädigen. Ebenso unerwünscht sind diese Hochsieder beim Lackieren von Kunststoffen.

Abziehlacke für den temporären Schutz von z. B. Kraftfahrzeugen sind bekannt. In der Japanischen Anmeldung JP 05 171 068 werden z. B. Abziehlacke beschrieben, bestehend aus Polybutyralharzen, Weichmacher, Lecitin, organ. Lösungsmittel, nicht sublimierbare gehinderte Phenole, Antiabsetzmittel und UV-Absorber. In der US-A 5 330 788 wird eine wässrige Lackkomposition beschrieben, die aus einem filmbildenden Acrylatpolymeren und oberflächenaktiven Verbindungen besteht.

Die Lackmischung enthält Alkanolamine und "surfactans" - also oberflächenaktive Substanzen. Als "surfactant" wird anionischer Phosphatester zugesetzt. Als Ablösemittel wird ein wässriges Konzentrat von Alkanolaminen, oberflächenaktiven Verbindungen und Chelatbildnern verwendet. Über den Verbleib der abgelösten Lackabfälle werden keine Angaben gemacht. Weiterhin wird eine Methode zur Automobillackierung beschrieben zum Schutz des Fahrzeugs vor Steinschlag ("stone chipping"). Der dort verwendete Lack ist ein nicht näher beschriebener Polyurethanlack, gelöst in Isopropanol, Toluol, Ethylacetat-Gemischen. Der Lack kann nach Beschädigung abgelöst werden und das Autoteil kann dann erneut mit der Lacklösung beschichtet werden.

Die genannten Verfahren zum temporären Schutz von lackierten oder unlackierten Gebrauchsgegenständen besitzen gravierende Nachteile. Einerseits werden für die Lackharze organische Lösungsmittel verwendet, die auf die lackierten Flächen einwirken, andererseits werden Ablösemittel verwendet, die z. T. stark basische Verbindungen enthalten. Über den Verbleib der abgelösten Lacke wird nichts berichtet.

Recyclisierbare Abziehlacke sind bisher nicht bekannt geworden. Die Forderungen der Automobilindustrie nach wässrigen Abziehlacken für die Außenkonservierung von Automobilen kann hier beispielhaft herangezogen werden. Außenkonservierer auf Wachsbasis werden in verschiedenen Ländem aus Umweltschutzgründen nicht mehr akzeptiert.

Das Anforderungsprofil eines modernen Abziehlackes sieht daher folgendermaßen aus: Der Lack sollte colöserfrei auf Wasserbasis zum Einsatz gelangen. Die Lacklösung oder Dispersion sollte durch Tauchen, Rakeln, Gießen, Pinseln und Sprühverfahren (Airless und Esta) apptizierbar sein.

Durch anschließendes Trocknen bei 20 bis 80°C sollte ein homogener Film entstehen. Der Film sollte wasserfest, transparent, reißfest, UV-beständig, temperaturbeständig, beständig gegen Niederschläge (organischer oder anorganischer Natur) sein und einerseits auf den Substraten haften, andererseits durch Abziehen leicht entfernbar sein.

Der Lack sollte durch ein geeignetes Verfahren wiederverwendbar sein.

Die Summe dieser Anforderungen wird von den bisher bekannten Methoden, Verfahren und Lacken nicht erfüllt.

Es muss daher als überraschend angesehen werden, dass wässrige Polyurethanpolyharnstoffdispersionen der nachstehend beschriebenen Art die Summe dieser Anforderungen erfüllen, wo doch bekannt war, dass die Polyurethanlacke zur Herstellung von gut haftenden Lackierungen und Mehrschichtlackierungen besonders geeignet sind (z.B. EP-A 634 431). Thermoplastische Polyurethane mit seitenständigen Carboxylgruppen (z.B. US 4,139,674) haften so gut auf Glas, dass sie zur Herstellung von Verbundgläsern vorzüglich geeignet sind.

Daher ist es besonders überraschend und für den Fachmann nicht vorhersehbar, dass die erfindungsgemäßen Polyurethanpolyharnstoffe unter Einhalten bestimmter Trokungsbedingungen diese Eigenschaft nicht aufweisen.

Wässrige Polyurethansysteme sind lange bekannt (z.B. Angewandte Makromolekulare Chemie, 98 (1981) 133-165); Abziehlacke auf dieser chemischen Basis sind indessen bisher nicht bekannt geworden.

Zum naheliegenden Stand der Technik zählen die EP-A 669 352, EP-A 407 798, EP-A 427 979 und EP-A 269 972. In der EP-A 269 972 werden in Wasser lösliche oder dispergierbare Polyurethane beschrieben, welche 0,5 bis 30 Gew.-% an innerhalb von end- oder seitenständig angeordneten Polyetherketten vorliegenden Ethylenoxideinheiten und 0,1 bis 120 Milliäquivalente pro 100 g Feststoff, Carboxylatgruppen aufweisen. Die Verfahrensprodukte sind zur Beschichtung von z. B. Textilien, Leder, Papier, usw. geeignet. Als Abziehlack sind sie unbrauchbar, da sie auf den Substraten zu gut haften und unter dem Einfluss von Wasser aufquellen. Diese nachteilige Eigenschaft besitzen sämtliche Polyurethandispersionen, die hydrophile Polyetherketten im Festkörper enthalten. In der US-A 3 412 054 werden carboxylatgruppenhaltige Polyurethandisperionen beschrieben, deren Wasserverdünnbarkeit begrenzt ist und der Anwesenheit eines Colösemittels bedarf.

Die in der EP-A 427 979 beschriebenen Verfahrensprodukte besitzen sehr gute lacktechnische Eigenschaften, wie z. B. Haftung und Witterungsbeständigkeit, zum Einsatz als Abziehlack sind sie aber wegen ihres Gehalts an hydrophilen, monofunktionellen Polyetherketten nicht geeignet.

Die EP-A 407 798 beschreibt ein Verfahren zur Herstellung von wässrigen Dispersionen von Polyurethanen und ihre Verwendung als Beschichtungsmittel für beliebige Substrate. Um eine Reaktion zwischen Isocyanatgruppen und Ammoniak auszuschließen, wird hier der Umweg über Trialkylammoniumverbindungen gewählt. Das Verfahren ist aufwendig und die Verfahrensprodukte enthalten neben unsubstituierten Ammonium-ionen auch Trialkylammoniumgegenionen.

DE-A 4 343 895 beschreibt ein Verfahren zur Herstellung von Polyurethandispersionen durch Umsetzung von nicht-neutralisierten Carboxylgruppen und/oder endständige NCO-Gruppen enthaltender Prepolymerer mit Ammoniak und anschließender Dispergierung in Wasser, dadurch gekennzeichnet, dass Ammoniak in chemisch gebundener Form als Ammoniumcarbonat eingesetzt wird. Aus den Beispielen geht hervor, dass N-Methylpyrrolidon als Colöser eingesetzt wird. Die Verfahrensprodukte werden zur Herstellung von vorzugsweise (mit Melaminharzen) vernetzten Überzügen für feste Oberflächen verwendet. Als Abziehlack sind diese Produkte unbrauchbar, einerseits wegen des Gehalts an Colösern (NMP), andererseits bilden sie ohne Vernetzer keine abziehbaren Filme.

Die EP-A 669 352 beschreibt "softfeel"-Lacke mit guter Filmmechanik und Haftung. Aus den Beispielen geht hervor, dass die Verfahrensprodukte einen Gehalt an organischen Lösemitteln, insbesondere NMP, von ca. 2 bis 3 % aufweisen. Lösemittel enthaltende wässrige Polyurethanharze sind als Abziehlacke ungeeignet, da sie die Lackschichten die sie schützen sollen, angreifen.

DE-A-4 016 713 offenbart Polyurethan-Polyharnstoffdispersionen aus a) einer Isocyanat-Komponente, b) höhermolekulare Polyhydroxyverbindungen, c) niedermolekulare mindestens difunktionelle Alkohole als Ketten verlängerer, d) NH-funktionelle Verbindungen mit einer Funktionolität > 1 und e) ionische Verbindungen mit mindestens einer NCO-reaktiven Gruppe sowie mindestens einer Carboxylat- oder Sulfonatgruppe. Gemäß des Ausführungs beispiele wird aus den Komponenten a)-c) und e) ein Prepolymer hesgestellt, wobei die Reaktion soweit geführt wird, bis der NCO-gehalt des Prepolymers etwa dem theoretisch berechneten Wert entspricht.

Colöserfreie, wässrige Dispersionen von Polyurethanpolyharnstoffen mit seitenständigen Carboxylgruppen, die zumindest teilweise durch Ammoniak neutralisiert sind, keine weiteren hydrophilen Gruppen aufweisen, und deren Lackschichten wieder zu wässrigen Dispersionen recyclisiert werden können, sind bisher nicht bekannt geworden.

Aufgabe der vorliegenden Erfindung ist es daher, neue wässrige, anionische Polyurethankunststoffe zur Verfügung zu stellen, die sich problemlos umweltfreundlich anwenden lassen und dabei Lacke, Beschichtungen und Klebstoffe ergeben, die die Anforderungen an die Mechanik, Wetterfestigkeit, Lichtechtheit, Transparenz, Temperaturbeständigkeit, Reißfestigkeit, Dehnung, Wasserfestigkeit und Resistenz gegen Niederschläge (organischer oder anorganischer Natur) und der Recyclisierbarkeit erfüllen.

Es wurde nun ebenfalls überraschenderweise gefunden, dass der Gehalt an im Polymer gebundenen Salzgruppen und die mittlere Teilchengröße der dispergierten Polymerpartikel wichtig für die Ausbildung von störungsfreien Schichten sind. Das erfindungsgemäße Verfahren erlaubt dem Fachmann mit diesen Kenngrößen reproduzierbar stabile anionische colöserfreise Polyurethandispersionen herzustellen und daraus auch in technischen Lackierstraßen störungsfreie Beschichtungen zu erzeugen.

Gegenstand der Erfmdung ist ein Verfahren zur Herstellung von anionischen Polyurethandispersionen bei dem
a) durch Reaktion von
   i) 20 bis 60 Gew.-% eines oder mehrerer aliphatischen und/oder cycloaliphatischen Diisocyanate,
   ii) 20 bis 80 Gew.-% eines oder mehrerer Makrodiole eines Molekulargewichts von 500 bis 10 000 g/mol,
   iii) 2 bis 12 Gew.-% einer oder mehrerer 2,2-Bis-(hydroxymethyl)-alkan-monocarbonsäuren,
   iv) 0 bis 15 Gew.-% eines oder mehrerer kurzkettiger Diole eines Molekulargewichts von 62 bis 400 g/mol und
   v) 0 bis 10 Gew.-% eines oder mehrerer monofunktioneller Alkohole eines Molekulargewichts von 32 bis 350 g/mol
   bei einer Reaktionstemperatur von 5 bis 150°C gegebenenfalls in Gegenwart von inerten Lösemitteln mit einem Siedepunkt im Temperaturintervall von 50 bis 100°C ein Polyurethan-Prepolymer hergestellt wird, wobei die Reaktion der Komponenten i) bis v) so lange geführt wird, bis der NCO-Gehalt des Prepolymers 65 bis 85 % des theoretisch auf Grundlage der Stöchiometrie der Reaktanden berechneten Wertes beträgt, und dieses Prepolymer in beliebiger Reihenfolge anschließend mit
b) 0 bis 15 Gew.-%eines oder mehrerer Diamine eines Molekulargewichts von 60 bis 300 g/mol als Kettenverlängerer,
c) 0 bis 10 Gew.-% eines oder mehrerer Kettenregler, ausgewählt aus der Gruppe bestehend aus Monoaminen, Alkanolaminen, Ammoniak und
d) 0 bis 30 Gew.-% Wasser, bezogen auf den Feststoff,
   gebildet aus den Komponenten a) bis c),
   oder einer Mischung der Komponenten a) bis d) versetzt wird und anschließend
e) 0,1 bis 10 Gew.-% an Neutralisationsmitteln und weiterem Wasser
   zugegeben und das gegebenenfalls enthaltene Lösemittel destillativ entfernt wird.

Gegenstand der vorliegenden Erfindung sind auch Polyurethan-Dispersionen, erhältlich nach dem erfindungsgemäßen Verfahren.

Ebenfalls Gegenstand der vorliegenden Erfindung ist die Verwendung der erfindungsgemäßen Polyurethan-Dispersionen als lichtechte Beschichtungsmittel.

Gegenstand der vorliegenden Erfindung ist auch die Herstellung von Beschichtungen aus lichtechten Lacken in Form der erfindungsgemäßen wässrigen Dispersionen auf beliebige Substrate und Aushärtung bei Temperaturen bis zu 150°C.

Die erfindungsgemäßen wässrigen Dispersionen werden als recyclisierbarer Abziehlack zum temporären Schutz von Kraftfahrzeugen, Stahl- und Aluminiumprofilen, Glas- und Kunststoffscheiben und beliebigen anderen Substraten durch Tauchen, Rakeln, Gießen, Sprühen, Pinseln und anschließendes Trocknen bei 20 bis 100°C bevorzugt 20 bis 80°C durch Wärme oder Infrarotlicht appliziert.

Sie sind wasserfeste, transparente, reißfeste, UV-beständige, temperatur-beständige, gegen Niederschläge (organischer oder anorganischer Natur) beständige Beschichtungen, die einerseits gut auf den Substraten haften, andererseits durch Abziehen leicht entfernt werden können.

Auch können zur Wiederverwendung der gebrauchten abgezogenen erfindungsgemäßen Lackschichten nach vorhergehender Reinigung diese mechanisch zerkleinert, gegebenenfalls unter Erwärmen in Aceton, Wasser und Neutralisationsmittel bevorzugt Ammoniak gelöst werden, das Aceton gegebenenfalls unter vermindertem Druck abdestilliert und der wiedergewonnene Abziehlack in Form einer wässrigen Dispersion zum erneuten Einsatz gebracht wird.

Herstellungsverfahren für Polyurethanpolyharnstoffdispersionen sind an sich bekannt (z.B. D. Dieterich, z.B. Angewandte Chemie 82, 53 (1970)). Colöserfreie Dispersionen sind z.B. in der EP-A 735,069 beschrieben. Das dort beschriebene Verfahren beschränkt sich auf den Einsatz von Dimethylolbuttersäure. Die gesamte Beschreibung zeigt, dass der Einsatz von Dimethylolpropionsäure in dem Verfahren der EP-A 735,069 nicht möglich ist. Dimethylolbuttersäure ist technisch nicht verfügbar.

Nach den beschriebenen Verfahren des Standes der Technik lassen sich auch keine Polyurethanpolyharnstoffdispersionen herstellen, die das Anforderungsprofil an colöserfreie recyclisierbare Abziehlacke erfüllen. Die gestellte Aufgabe konnte überraschenderweise durch den Einsatz an und für sich bekannter Substanzen in bevorzugten Mengenverhältnissen und insbesondere durch das einzigartige Herstellungsverfahren gelöst werden.

Es wurde nämlich überraschenderweise gefunden, dass immer dann vorzügliche wetterfeste erfindungsgemäße Lacke aus den Polyurethanpolyharnstoffdispersionen erhalten werden, wenn man in der Prepolymerstufe nicht den berechneten NCO-Gehalt sondern einen Wert von 65 bis 85 % des berechneten NCO-Gehaltes einstellt. Durch diese Maßnahme entstehen bei der Kettenverlängerungsreaktion reproduzierbar die erfindungsgemäßen Polyurethanpolyharnstoffe.

Als Komponente a) i) werden bevorzugt aliphatische und/oder cycloaliphatische Di-isocyanate verwendet, wie z. B. Isophorondiisocyanat (IPDI), 4,4'-Dicyclohexylmethandiisocyanat, 1-Methyl-2,4-diisocyanato-cyclohexan und 1-Methyl-2,6-diisocyanato-cyclohexan in beliebigen Mischungsverhältnissen, 1,6-Hexamethylendiisocyanat und/oder 1,3-Cyclohexan-diisocyanat. Die Mitverwendung von geringen Anteilen an aromatischen Diisocyanaten wie z. B. 2,4- und 2,6-Toluoldiisocyanat oder 2,4'und 4,4'-Diphenylmethandiisocyanat ist ebenfalls möglich.

Als Komponente a) ii) werden Makrodiole mit einem Molekulargewicht von 500 bis 10000 eingesetzt. Hierbei handelt es sich bevorzugt um Polyesterdiole durch Umsetzung von Dicarbonsäuren mit Diolen gegebenenfalls unter Zuhilfenahme üblicher Veresterungskatalysatoren vorzugsweise nach dem Prinzip einer Schmelz- oder Aceotropkondensation bei Temperaturen von 140 bis 240°C.

Beispiele geeigneter Säuren oder Anhydride sind Adipinsäure, Bernsteinsäure(anhydrid), Maleinsäure(anhydrid), Sebacinsäure, Azelainsäuren, die unterschiedlichsten handelsüblichen Dimerfettsäuren (in hydrierter und nicht-hydrierter Form), Phthalsäure(anhydrid), Isophthalsäure, Tetrahydrophthalsäure(anhydrid), 1,4-Cyclohexandicarbonsäure, Hexahydrophthalsäure(anhydrid). Als Diole kommen die technisch verfügbaren Diole zum Einsatz wie z. B. Ethylenglykol, 1,2- und 1,3-Propandiol, 1,3-und 1,4-Butandiol, 1,6-Hexandiol, Diethylenglykol, Dipropylenglykol, Neopentylglykol oder Mischungen derariger Diole. Bevorzugt sind Polyesterdiole aus Adipinsäure, Hexandiol und Neopentylglykol.

Ebenfalls geeignet sind Polycarbonatdiole, Polycaprolactondiole, Hydroxypolytetrahydrofurane oder Hydroxypolyether auf Basis von Propylenoxid.

Geeignete Polycarbonatdiole werden z. B. erhalten, indem Kohlensäurederivate, wie z. B. Diphenylcarbonat oder Phosgen mit Alkoholen, vorzugsweise Diolen der genannten Art, umgesetzt werden.

Die mittlere Molmasse dieser Polyole liegt zwischen 500 und 10000, bevorzugt zwischen 700 und 4000, besonders bevorzugt sind Makrodiole mit Molmassen zwischen 1000 und 2500.

Bei den Ausgangskomponenten a) iii) handelt es sich bevorzugt um 2,2-Bis-(hydroxymethyl)-alkanmonocarbonsäuren mit insgesamt 5 - 8 Kohlenstoffatomen, d. h. Verbindungen der allgemeinen Formel (I) 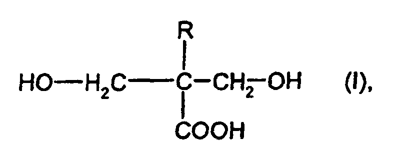 in welcher R für einen Alkylrest mit 1 - 4 Kohlenstoffatomen steht.

Ganz besonders bevorzugt ist 2,2-Dimethylolpropionsäure.

Als Ausgangskomponente a) iv) kommen die beschriebenen kurzkettigen Diole vom Molekulargewicht 62 - 400 in Betracht. Besonders bevorzugt ist 1,4-Butandiol.

Als Ausgangskomponente a) v) kommen in Betracht, Methanol, Ethanol, Butanol, Hexanol, 2-Ethylhexanol, Oktanol und Dodecanol und beliebige Alkohole des Molekulargewichts 32 bis 350.

Als Komponente b) können alle aliphatischen und/oder cycloaliphatischen Verbindungen verwendet werden, die mindestens zwei gegenüber Isocyanaten reaktive Aminogruppen tragen. Hierfür infrage kommen insbesondere Ethylendiamin, Propylendiamin, Hexamethylendiamin, Isophorondiamin, p-Xylylendiamin, 4,4'-Diaminodicyclohexylmethan, und 4,4'-Diamino-3,3'-dimethyldicyclohexylmethan.

Als Komponente c) kommen zum Beispiel Ammoniak, monofunktionelle Amine, wie Methylamin, Ethylamin, n-Propylamin, Isopropylamin, Cyclohexylamin, Octylamin, Diethylamin, Dibutylamin, sowie Aminoalkohole wie Ethanolamin, Diethanolamin und Propanolamin in Betracht.

Als Neutralisationsmittel e) sind zum Beispiel Ammoniak, N-Methylmorpholin, Dimethylisopropanolamin, Triethylamin, Dimethylethanolamin, Methyldiethanolamin, Triethanolamin, Morpholin, Tripropylamin, Ethanolamin, Diethanolamin, Triisopropanolamin und Gemische daraus geeignet.

In einer bevorzugten Ausführungsform werden die Komponenten a) i), ii) und iii) in einem Reaktor vorgelegt und unter wasserfreien Bedingungen in einem Temperaturbereich von 50 bis 150°C, bevorzugt 50 bis 11°C, umgesetzt, danach wird abgekühlt und dem Ansatz technisch übliches Aceton sowie das kurzkettige Diol (iv) von MG 62 bis 400 und gegebenenfalls monofunktionelle Alkohole (v) zugegeben und so lange erhitzt, bis der NCO-Gehalt der Mischung auf einen Wert von 65 bis 85 % des berechneten NCO-Gehaltes gefallen ist. Auf diese Weise entsteht das NCO-Prepolymer. Danach wird der Ansatz mit weiterem Aceton verdünnt und mit der berechneten Menge eines Gemisches aus Diamin und Kettenabbrecher - gelöst in Wasser - versetzt. Auf diese Weise setzt man 90 % der NCO-Gruppen mit dem Kettenverlängerer, dem Diamin, und dem Kettenabbrecher um. Das verbleibende Isocyanat lässt man mit dem vorhandenen Wasser zum erfindungsgemäßen Polyurethanpolyharnstoff abreagieren.

Die Polymeraufbaureaktion wird bevorzugt ohne die Verwendung von Katalysatoren durchgeführt, es ist aber auch möglich, die in der Isocyanatchemie bekannten Katalysatoren einzusetzen (z.B. tert.-Amine wie Triethylamin, Zinnverbindungen wie Zinn-II-octoat, Dibutylzinndilaurat u.a. gebräuchliche Katalysatoren)..

Wenn kein NCO mehr nachweisbar ist (IR-Kontrolle), gibt man dem Ansatz die berechnete Menge Neutralisationsmittel, bevorzugt Ammoniaklösung zu, so dass 50 bis 60 % der vorliegenden Carboxylgruppen durch den Ammoniak neutralisiert werden.

Durch Zugabe von Wasser und anschließendem Entfernen des eingesetzten Acetons durch Destillation stellt man die gewünschte Festkörperkonzentration ein. Polyurethanpolyharnstoffdispersionen, die nach dem erfindungsgemäßen Verfahren gewonnen werden, besitzen 20 bis 60 Gew.% Feststoff bevorzugt 30 bis 40 Gew.% Feststoff in Wasser; ihre mittleren Teilchendurchmesser betragen 20 bis 1.000 nm, bevorzugt 50 bis 500 nrn.

Die pH-Werte der weißen, erfindungsgemäßen lagerstabilen Polyurethanpolyharnstoffdispersionen liegen im Bereich von 6 bis 9.

Die erfindungsgemäßen Polyharnstoffdispersionen liefern nach der physikalischen Trocknung bei 20 bis 100°C, bevorzugt 20 bis 80°C transparente hochglänzende, UV-beständige, temperaturbeständige (-35 bis 80°C), gegen Niederschläge (organischer oder anorganischer Natur) resistente Lacke, die einerseits gut haften andererseits durch Abzeihen leicht entfernt werden können. Die Reißfestigkeit und Dehnung der Lackschichten ist angemessen hoch.

Bei der Formulierung der Lacke können die in der Lackchemie üblichen Hilfsmittel, wie z. B. Pigmente, Lichtstabilisatoren, Antiabsetzmittel, Verdicker, oberflächenaktive Verbindungen, Entschäumer, etc. eingesetzt werden.

Die Applikation der Lacke erfolgt nach den üblichen Methoden der Lacktechnologie durch Tauchen, Rakeln, Gießen, Sprühen, Spritzen, Pinseln oder Walzen. Sie dienen als Abziehlack zum temporären Schutz von Kraftfahrzeugen, Stahl- und Aluminiumprofilen, Glas- und Kunststoffscheiben bzw. Artikeln. Nach Applikation werden die lackierten Teile bei Raumtempertur oder bei erhöhter Temperatur bis zu 100°C getrocknet.

Trocknet man die erfindungsgemäßen Polyurethanharnstoffdispersionen bis zu 30 Minuten bei 140-bis 150°C, so entstehen auf den Substraten gut haftende Überzüge. Trocknungstemperaturen über 150°C sind selbstverständlich auch möglich, aber die Anwendung derart hoher Temperaturen ist im allgemeinen unwirtschaftlich.

Die Recyclisierbarkeit der gebrauchten, abgezogenen Lackschichten ist sehr einfach. Die abgezogenen Lackschichten werden, gegebenenfalls nach vorhergehender Reinigung, mechanisch zerkleinert, gegebenenfalls unter Erwärmung in einem Reaktionskessel in Aceton gelöst, nach Auflösen gegebenenfalls filtriert mit der berechneten Menge an Neutralisationsmittel bevorzugt Ammoniak versetzt, mit Wasser auf den gewünschten Feststoffgehalt der angestrebten wässrigen Polyurethanpolyharnstoffdispersion verdünnt und das Aceton gegebenenfalls unter vermindertem Druck abdestilliert.

### Beispiele

### Beispiel 1

In einem Reaktionsgefäß werden 170 g (0,1 mol) eines Polyesters aus Adipinsäure, sowie 1,6-Hexandiol und Neopentylglykol (im Molverhältnis 0,65 : 0,35) mit einem durchschnittlichen Molekulargewicht von 1700 g/mol und 2 % OH 30 Minunten bei 120°C und 10 mbar unter Rühren entwässert. Unter Stickstoff trägt man 13,4 g (0,1 mol) Dimethylolpropionsäure und 111 g (0,5 mol) Isophorondiisocyanat ein. Nach 1 Stunde Reaktionszeit bei 110 °C wird der Ansatz auf 60°C abgekühlt und in 100 g Aceton gelöst. Nach Zugabe von 18 g (0,2 mol) 1,4-Butandiol wird 22 Stdn. bei 50 °C bis zu einem NCO-Gehalt von 1,60 % (berechnet 2,04 %) nachgerührt und mit 500 g Aceton verdünnt. Zum NCO-Prepolymer wird bei 50°C eine Mischung aus 10,6 g (0,062 mol) Isophorondiamin, 1,07 g (0,016 mol) 25 %ige Ammoniaklösung und 60 g Wasser gegeben. Anschließend rührt man 5 Stdn. bei 50°C nach. Es wird mit 3,4 g (0,05 mol) 25 %iger Ammoniaklösung neutralisiert und mit 450 g Wasser dispergiert. Das Aceton entfernt man bis 50 °C und 150 mbar und erhält so eine weiße Dispersion mit einem Feststoffgehalt von 39,2 % und einer mittleren Teilchengröße von 263 nm.

Der Neutralisationsgrad beträgt 50 %, der Salzgehalt 0,15 mol pro kg Feststoff.

### Beispiel 2

Man verfährt wie in Beispiel 1, ersetzt jedoch den Ammoniak als Neutralisationsmittel durch 3,56 g (0,04 mol) Dimethylethanolamin. Nach dem Entfernen des Acetons erhält man eine weiße Dispersion mit einem Feststoffgehalt von 35 % und einer mittleren Teilchengröße von 309 nm.

Der Neutralisationsgrad beträgt 40 %, der Salzgehalt 0,12 mol pro kg Feststoff.

### Beispiel 3

Man verfährt wie im Beispiel 1, neutralisiert jedoch mit 4,08 g (0,06 mol) 25 %iger Ammoniaklösung und dispergiert mit 680 g Wasser. Nach dem Entfernen des Acetons erhält man eine weiße Dispersion mit einem Feststoffgehalt von 31,4 % und einer mittleren Teilchengröße von 183 nm.

Der Neutralisationsgrad beträgt 60 %, der Salzgehalt 0,18 mol pro kg Feststoff.

### Beispiel 4

In einem Reaktionsgefäß werden 245,1 g (0,125 mol) eines Polyesters aus Adipinsäure sowie 1,2-Ethandiol und 1,4-Butandiol (im Molverhältnis 0,69 : 0,31) mit einem durchschnittlichen Molekulargewicht von 1961 g/mol und 1,73 % OH 30 Minuten bei 120°C und 10 mbar entwässert. Unter Stickstoff trägt man 16,75 g (0,125 mol) Dimethylolpropionsäure und 131 g (0,5 mol) Dicyclohexylmethan-4,4'-diisocyanat ein. Nach 1 Stunde Reaktionszeit bei 110 °C wird der Ansatz auf 80 °C abgekühlt und in 250 g Butanon-2 gelöst. Nach Zugabe von 11,25 g (0,125 mol) 1,4-Butandiol wird 12 Stdn. bei 80°C bis zu einem NCO-Gehalt von 1,28 % (berechnet 1,60 %) nachgerührt und bei 50°C mit 500 g Aceton verdünnt. Zum NCO-Prepolymer wird bei 50°C eine Mischung aus 17 g (0,1 mol) Isophorondiamin, 1,7 g (0,025 mol) 25 %ige Ammoniaklösung und 100 g Wasser gegeben. Anschließend rührt man 1 Std. bei 50 °C nach. Es wird mit 4,45 g (0,05 mol) Dimethylethanolamin neutralisiert und mit 530 g Wasser dispergiert. Nach dem Entfernen der organischen Lösungsmittel bis 50 °C und 100 mbar erhält man so eine weiße Dispersion mit einem Feststoffgehalt von 38,7% und einer mittleren Teilchengröße von 480 nm.

Der Neutralisationsgrad beträgt 40 %, der Salzgehalt 0,12 mol pro kg Feststoff

### Beispiel 5

In einem Reaktionsgefäß werden 170 g (0,1 mol) des Polyesters aus Beispiel 1 30 Minuten bei 120 °C und 10 mbar unter Rühren entwässert. Unter Stickstoff trägt man 13,4 g (0,1 mol) Dimethylolpropionsäure und 111 g (0,5 mol) Isophorondiisocyanat ein. Nach 1 Stunde Reaktionszeit bei 110 °C wird der Ansatz auf 60 °C abgekühlt und in 100 g Aceton gelöst. Nach Zugabe von 18 g (0,2 mol) 1,4-Butandiol wird 21 Stdn. bei 50°C bis zu einem NCO-Gehalt von 1,62 % (berechnet 2,04 %) nachgerührt und mit 500 g Aceton verdünnt. Zum NCO-Prepolymer wird bei 50°C eine Mischung aus 1,09 g (0,016 mol) 25 %ige Ammoniaklösung und 60 g Wasser gegeben und 21 Std. bei 50 °C nachgerührt. Es wird mit 3,4 g (0,05 mol) 25 %iger Ammoniaklösung neutralisiert und mit 450 g Wasser dispergiert. Nach dem Entfernen des Acetons bis 50 °C und 150 mbar erhält man eine weiße Dispersion mit einem Feststoffgehalt von 39,8 % und einer mittleren Teilchengröße von 210 nm.

Der Neutralisationsgrad beträgt 50 %, der Salzgehalt 0,16 mol pro kg Feststoff.

### Beispiel 6 (Verwendung der wässrigen anionischen Polyurethandispersion als Lack)

99,5 g des Rohstoffs Beispiel 1 wurden mit 0,5 g eines Untergrund-benetzenden, verlaufsfördernden Additivs (Handelsprodukt ByK®346 Lft der Firma ByK-Chemie GmbH, Wesel) unter Rühren homogen vermischt und mit destilliertem Wasser auf eine Auslaufzeit von 30 s im DIN-Becher 4 mm bei 23°C verdünnt.

### Beispiel 7 (Verwendung der wässrigen anionischen Polyurethandispersion als Lack)

99,5 g des Rohstoffs Beispiel 2 wurden mit 0,5 g eines untergrund-benetzenden, verlaufsfördernden Additivs (Handelsprodukt ByK®346 Lft der Firma ByK-Chemie GmbH, Wesel) unter Rühren homogen vermischt und mit destilliertem Wasser auf eine Auslaufzeit von 30 s im DINBecher 4 mm bei 23°C verdünnt.

### Verarbeitung von Abziehlackdispersionen

Die Abziehlackdispersionen aus Beispiel 6 und 7 wurden mittels einer üblichen Fließbecherpistole mit einer Düse mit 1,5 mm Durchmesser und einem Zerstäuberdruck von 3 Bar auf unterschiedliche Prüfsubstrate wie mit 2K-PUR-Klarlacken aus der Automobilindustrie vorlackierten Blechen in einer Schichtdicke von 160 bis 300 µm Nassfilm bei einer rel. Feuchte von 50 bis 65 % bei ca. 23°C aufgespritzt.

### Trockung

Die Nassfilme wurden bei einer rel. Feuchte von 50 bis 65 % und ca. 23°C ca. 5 Minuten abgelüftet und anschließend in einem Frischluftofen 10 Minuten bei 80°C getrocknet. Hieraus resultierte ein Trockenfilm von 50 bis 70 µm.

### Lackeigenschaften Beispiel 6 und 7

| | Beispiel 6 | Beispiel 7 |
|---|---|---|
| Xenotest Fa Heraeus DIN 53231 Methode D (17:3, Wendelauf) | >250 Std. beständig | >250 Std. beständig |
| | | |
| Kondenswassertest DIN 50017 - KK | >250 Std. beständig | >240 Std. beständig |
| | | |
| MB-Chemikalientest 30 Min. 36-75°C | Beispiel 6 und 7 | |
| | | |
| Baumharz | Nach 1 Std. 75°C auf dem (Auto)Lack keine Schädigung | |
| | | |
| Pankreatin | Nach 1 Std. 75°C auf dem (Auto)Lack keine Schädigung | |
| | | |
| 1 %ige Schwefelsäure | Nach 1 Std. 58°C auf dem (Auto)Lack keine Schädigung | |
| | | |
| FAM-Test (10 Min. Benzin-Einwirkung und anschließendem Abtupfen mit Watte) | Nach 1 Std. auf dem (Auto)Lack keine Schädigung | |

### Beispiel 8 (Recyclisierung)

Von einer Abziehlackfolie, hergestellt aus einer wässrigen Polyurethanharnstoffdispersion gemäß Beispiel 2, wurde titrimetrisch der Salzgehalt bestimmt. Der gefundene Wert betrug 0,11 mol/kg Folie. Nach dem Auflösen von 130 g Folie in 300 g Aceton und Zugabe von 0,36 g Dimethylethanolamin wurde mit 300 g Wasser dispergiert. Die Dispersion hatte nach dem Entfernen des Acetons einen Feststoffgehalt von 31,2 % und einen Neutralisationsgrad von 46 %. Der Salzgehalt beträgt 0,14 mol/kg Festharz und die mittlere Teilchengröße 160 nm. Ein mit einer 200 µ Rakel aufgetragener und bei 80°C getrockneter Film ist klar, glänzend und störungsfrei und lässt sich wie der ursprüngliche Film leicht abziehen.

### Vergleichsbeispiele

In einem Reaktionsgefäß werden 170 g (0,1 mol) des Polyesters aus Beispiel 1 30 Minuten bei 120 °C und 10 mbar unter Rühren entwässert. Unter Stickstoff trägt man 13,4 g (0,1 mol) Dimethylolpropionsäure und 111 g (0,5 mol) Isophorondiisocyanat ein. Nach 1 Stunde Reaktionszeit bei 110 °C wird der Ansatz auf 60°C abgekühlt und in 100 g Aceton gelöst. Nach Zugabe von 18 g (0,2 mol) 1,4-Butandiol wird 6 Stdn. bei 50°C bis zu einem NCO-Gehalt von 1,95 % (berechnet 2,04 %) nachgerührt und mit 500 g Aceton verdünnt. Zum NCO-Prepolymer wird bei 50°C eine Mischung aus 10,6 g (0,062 mol) Isophorondiamin, 1,07 g (0,016 mol) 25 %ige Ammoniaklösung und 60 g Wasser gegeben. Anschließend rührt man 5 Stunden bei 50 °C nach. Es wird mit 3,4 g (0,05 mol) 25 %iger Ammoniaklösung neutralisiert und mit 450 g Wasser dispergiert.

Das Aceton entfernt man bis 50°C und 150 mbar und erhält so eine grobteilige Dispersion, die sich bei Lagerung absetzt.

Der Ansatz wurde wiederholt mit dem Unterschied, dass der NCO-Gehalt für das NCO-Prepolymer 1,98 % NCO betrug und die Neutralisation mit 4,08 g (0,06 mol) 25 %iger Ammoniaklösung durchgeführt wurde. Die auf diese Weise erhaltene Dispersion ist feinteilig und setzt sich nicht ab.

Daraus hergestellte Filme, die bei Raumtemperatur und 80°C getrocknet wurden, zeigen Risse und sind nicht homogen.

In weiteren Beispielen (Zusammensetzung wie Beispiel 1 bzw. Vergleichsbeispiel) zeigte sich, dass bei NCO-Werten, die nur geringfügig unter dem berechneten NCO-Gehalt von 2,04 % lagen, keine Reproduzierbarkeit erreicht werden konnte.

## Patentansprüche

1. Verfahren zur Herstellung von anionischen Polyurethandispersionen bei dem
a) durch Reaktion von
i) 20 bis 60 Gew.-% eines oder mehrerer aliphatischen und/oder cycloaliphatischen Diisocyanate,
ii) 20 bis 80 Gew.-% eines oder mehrerer Makrodiole eines Molekulargewichts von 500 bis 10 000 g/mol,
iii) 2 bis 12 Gew.-% einer oder mehrerer 2,2-Bis-(hydroxymethyl)-alkan-monocarbonsäuren,
iv) 0 bis 15 Gew.-% eines oder mehrerer kurzkettiger Diole eines Molekulargewichts von 62 bis 400 g/mol und
v) 0 bis 10 Gew.-% eines oder mehrerer monofunktioneller Alkohole eines Molekulargewichts von 32 bis 350 g/mol
bei einer Reaktionstemperatur von 5 bis 150°C gegebenenfalls in Gegenwart von inerten Lösemitteln mit einem Siedepunkt im Temperaturintervall von 50 bis 100°C ein Polyurethan-Prepolymer hergestellt wird, wobei die Reaktion der Komponenten i) bis v) so lange geführt wird, bis der NCO-Gehalt des Prepolymers 65 bis 85 % des theoretisch auf Grundlage der Stöchiometrie der Reaktanden berechneten Wertes beträgt, und dieses Prepolymer in beliebiger Reihenfolge anschließend mit
b) 0 bis 15 Gew.-% eines oder mehrerer Diamine eines Molekulargewichts von 60 bis 300 g/mol als Kettenverlängerer,
c) 0 bis 10 Gew.% eines oder mehrerer Kettenregler, ausgewählt aus der Gruppe bestehend aus Monoaminen, Alkanolaminen und Ammoniak und
d) 0 bis 30 Gew.-% Wasser, bezogen auf den Feststoff,
gebildet aus den Komponenten a) bis c),
oder einer Mischung der Komponenten a) bis d) versetzt wird und anschließend
e) 0,1 bis 10 Gew.-% an Neutralisationsmitteln und weiterem Wasser
zugegeben und das gegebenenfalls enthaltene Lösemittel destillativ entfernt wird.

2. Wässrige Polyurethan-Dispersionen erhältlich nach einem Verfahren gemäß Anspruch 1.

3. Verwendung der wässrigen Polyurethan-Dispersionen gemäß Anspruch 2 als lichtechte Beschichtungsmittel.

4. Herstellung von Beschichtungen aus lichtechten Beschichtungsmitteln gemäß Anspruch 3 durch Aufbringen der Beschichtungsmittel auf beliebige Substrate und Aushärtung bei Temperaturen bis 150°C.

5. Beschichtungen erhältlich aus lichtechten Beschichtungsmitteln gemäß Anspruch 3.

6. Verfahren zum Recycling der Beschichtungen gemäß Anspruch 5, bei dem die abgezogenen Lackschichten gegebenenfalls gereinigt, zerkleinert und in Aceton, Wasser und einem Neutralisationsmittel gelöst werden und anschließend das Aceton abdestilliert wird, so dass wieder eine wässrige Polyurethan-Dispersion zum erneuten Einsatz erhält.

## Claims

1. Process for the preparation of anionic polyurethane dispersions which comprises
a) preparing a polyurethane prepolymer by reacting
i) 20 to 60 wt. % of one or more aliphatic and/or cycloaliphatic diisocyanates,
ii) 20 to 80 wt. % of one or more macrodiols having a molecular weight of 500 to 10 000 g/mol,
iii) 2 to 12 wt. % of one or more 2,2-bis(hydroxymethyl)-alkane-monocarboxylic acids,
iv) 0 to 15 wt. % of one or more short-chain diols having a molecular weight of 62 to 400 g/mol, and
v) 0 to 10 wt. % of one or more monofunctional alcohols having a molecular weight of 32 to 350 g/mol
at a reaction temperature of 5 to 150°C, optionally in the presence of inert solvents having a boiling point in the temperature range from 50 to 100°C, the reaction of components i) to v) being carried out until the NCO content of the prepolymer is 65 to 85% of the figure calculated theoretically on the basis of the stoichiometry of the reactants, and subsequently admixing this prepolymer in any desired sequence with
b) 0 to 15 wt. % of one or more diamines having a molecular weight of 60 to 3 00 g/mol as chain extenders,
c) 0 to 10 wt. % of one or more chain terminating agents selected from the group consisting of monoamines, alkanolamines and ammonia, and
d) 0 to 30 wt. % of water, based on the solids,
formed from components a) to c),
or with a mixture of components a) to d), and subsequently adding
e) 0.1 to 10 wt. % of neutralizing agents and additional water,
and removing any present solvent by distillation.

2. Aqueous polyurethane dispersions obtainable by a process according to Claim 1.

3. Use of the aqueous polyurethane dispersions according to Claim 2 as lightfast coating compositions.

4. Production of coatings from lightfast coating compositions according to Claim 3 by applying the coating compositions to any desired substrates and curing them at temperatures up to 150°C.

5. Coatings obtainable from lightfast coating compositions according to Claim 3.

6. Method of recycling the coatings according to Claim 5, wherein the stripped coating-material layers are optionally cleaned, comminuted and dissolved in acetone, water and a neutralizing agent and subsequently the acetone is distilled off to give an aqueous polyurethane dispersion again for use again.

## Revendications

1. Procédé de fabrication de dispersions de polyuréthanne anioniques pour lequel
a) par réaction de
i) 20 à 60 % en poids d'un ou plusieurs diisocyanates aliphatiques et/ou cycloaliphatiques,
ii) 20 à 80 % en poids d'un ou plusieurs macrodiols d'un poids moléculaire de 500 à 10 000 g/mole,
iii) 2 à 12 % en poids d'un ou plusieurs acides monocarboxyliques de 2,2-bis-(hydroxyméthyl)-alcane,
iv) 0 à 15 % en poids d'un ou plusieurs diols à chaîne courte d'un poids moléculaire de 62 à 400 g/mole et
v) 0 à 10 % en poids d'un ou plusieurs alcools simples d'un poids moléculaire de 32 à 350 g/mole
à une température de réaction de 5 à 150°C, le cas échéant en présence de solvants inertes d'un point d'ébullition situé dans l'intervalle de températures de 50 à 100°C, on produit un prépolymère de polyuréthanne, la réaction des composants i) à v) étant conduite jusqu'à ce que la teneur en NCO du prépolymère atteigne 65 à 85 % de la valeur théorique calculée sur base de la stoechiométrie des réactants, et ce prépolymère étant ensuite mélangé dans un ordre quelconque avec
b) 0 à 15 % en poids d'une ou plusieurs diamines d'un poids moléculaire de 60 à 300 g/mole comme prolongateurs de chaîne,
c) 0 à 10 % en poids d'un ou plusieurs régulateurs de chaîne, sélectionnés parmi le groupe constitué des monoamines, alcanolamines et l'ammoniac et
d) 0 à 30 % en poids d'eau, rapportés à la matière solide,
formée par les composants a) à c),
ou un mélange des composants a) à d) et qu'on ajoute ensuite
e) 0,1 à 10 % en poids d'agents de neutralisation et d'eau supplémentaire et qu'on élimine le cas échéant le solvant contenu par distillation.

2. Dispersions aqueuses de polyuréthanne pouvant être obtenues selon un procédé suivant la revendication 1.

3. Utilisation des dispersions aqueuses de polyuréthanne suivant la revendication 2 comme produit de revêtement stable à la lumière.

4. Fabrication de revêtements en produits de revêtement stables à la lumière suivant la revendication 3 par application des produits de revêtement sur des substrats quelconques et durcissement à des températures atteignant 150°C.

5. Revêtements pouvant être obtenus à partir de produits de revêtement stables à la lumière suivant la revendication 3.

6. Procédé de recyclage des revêtements suivant la revendication 5, pour lequel les couches de peintures arrachées sont le cas échéant nettoyées, déchiquetées et dissoutes dans l'acétone, l'eau et un agent de neutralisation et l'acétone est ensuite éliminé par distillation, de sorte qu'on obtient à nouveau une dispersion aqueuse de polyuréthanne réutilisable.
